# EUROPEAN PATENT APPLICATION

(11) **EP 4 763 475 A1**
(43) Date of publication of application: **24.06.2026**
(21) Application number: 24855602.9
(22) Date of filing: 02.08.2024
(51) Int. Cl.: B29C 53/02, B21D 7/00

(54) **BENDING METHOD FOR FILLING-TYPE INSULATING GLASS SPACER, AND GAS DISTRIBUTION SYSTEM**

(30) Priority: 18.08.2023 CN 202311047875
(71) Applicant: Shandong Natergy Energy Technology Co., Ltd., Zibo, Shandong 255088 (CN)
(72) Inventor: CAI, Wei, Zibo, Shandong 255088 (CN); SUN, Yanzheng, Zibo, Shandong 255088 (CN); ZHANG, Mingyuan, Zibo, Shandong 255088 (CN)
(74) Representative: Isern Patentes y Marcas S.L.
(86) International application number: PCT/CN2024/109427
(87) International publication number: WO 2025/039876

(57) **Abstract**

The present invention relates to the technical field of insulating glass manufacturing. Disclosed are a bending method for a filling-type insulating glass spacer, and a gas distribution system. A plurality of through holes are formed in the filling-type spacer, and the spacer is filled with a drying agent. The bending method for a filling-type insulating glass spacer comprises: placing a spacer in a horizontal direction; blowing gas into through holes in the spacer at a place for bending, such that the drying agent at the place for bending the spacer is reduced and moves towards two sides, and some of the through holes are located at two sides of the place for bending; and blowing gas into the place for bending the spacer, such that the drying agent at the place for bending the spacer is reduced and moves towards two sides, and then bending is conducted at the place for bending the spacer. The present application can solve the problem that the drying agent filling the filling-type spacer may hinder bending the spacer, can improve the processing quality of the filling-type spacer, and can increase the processing efficiency.

## Description

### Related Application

The present application claims priority to Chinese Invention Patent Application No. 202311047875.2, entitled "BENDING METHOD FOR FILLING-TYPE INSULATING GLASS SPACER, AND GAS DISTRIBUTION SYSTEM".

### Technical Field

The present invention relates to the technical field of manufacturing insulating glass, and in particular to a bending method for a filling-type spacer for an insulating glass, and a gas distribution system.

### Background

Before in use, two ends of a filling-type spacer are sealed and the spacer is filled with granular drying agent. The filling quantity of drying agent inside the filling-type spacer is relatively high, potentially occupying 50% to 90% of the internal space of the spacer, to ensure dryness within the insulating glass. However, the presence of a drying agent inside the spacer will hinder the bending of the spacer. A vibration method is adopted in the existing process, but the vibration requires excessive time, affecting the efficiency of bending during production. Direct bending may lead to cracking, tearing, irregularities, or excessive wrinkling at the bent parts of the spacer.

In the process of adopting vibration, vibration is applied to the bent part of the filling-type spacer during bending of the spacer to keep a drying agent away from the bent part. This method is highly prone to excessive vibration time, resulting in a large bending angle deviation, damage to a bent corner, bulging angle and other phenomena, thereby affecting the subsequent processing quality of the insulating glass and resulting in a low actual processing efficiency. If there are defects in the bending, air leakage may occur in the insulating glass due to defects on the surface of the spacer during the first application of butyl rubber sealant on the insulating glass, resulting in complete failure of molecular sieves in the spacer installed inside the insulating glass, which poses a significant quality problem.

The above situation may seriously affect the use performance of the spacer installed inside the insulating glass, greatly reduce the use performance of the spacer, and affect product quality. According to the current production demand, there is an urgent need for a new bending method for a filling-type spacer, to improve the processing quality and the processing efficiency of the filling-type spacer.

### Summary

In order to overcome the above-mentioned defects of the prior art, the embodiments of the present disclosure aim to solve the technical problem by providing a bending method for a filling-type spacer for an insulating glass, and a gas distribution system, which can solve the problem that a drying agent inside the filling-type spacer will hinder the bending of the spacer, and can improve the processing quality and the processing efficiency of the filling-type spacer.

In order to achieve the above object, the technical solution adopted by the present disclosure is as follows:

A bending method for a filling-type spacer for an insulating glass, wherein the filling-type spacer is formed in a plurality of through holes, and the spacer is filled with drying agent.

The bending method for a filling-type spacer for an insulating glass comprises:
placing the spacer in a horizontal direction;
blowing gas into the through holes at a to-be-bent part of the spacer, such that a drying agent at the to-be-bent part of the spacer is reduced and moves towards two sides, and a portion of the through holes are located at two sides of the to-be-bent part;
after gas blowing operation is completed at the spacer, performing a bending operation at the to-be-bent part of the spacer.

A gas distribution system to which the bending method for a filling-type spacer for an insulating glass as described in any of the above aspects is applied, the gas distribution comprising:
a gas storage device;
a pneumatic control valve;
a drying device, a filtering device, and a depressurizing device or any one or combination of any two thereof connected between an outlet of the gas storage device and the pneumatic control valve;
an inflating mechanism, a gas inlet port of which is connected to an outlet of the pneumatic control valve, and a gas outlet port of which can abut against wall surface of the to-be-bent part of the spacer, so that the gas outlet port is communicated with the plurality of through holes at the to-be-bent part of the spacer.

Compared with the prior art, the present disclosure has the following beneficial effects:
1. Compared with the method of applying vibration and then performing bending in the prior art, the bending method for a filling-type spacer for an insulating glass in the present application can effectively reduce generation of noise and overcome the problem that the bending mechanism components are prone to loosen due to vibration, thereby improving the stability of the mechanism.
2. In the bending method for a filling-type spacer for an insulating glass in the present application, the through holes on the filling-type spacer which are per se used such that the internal drying agent are communicated with the gas inside the insulating glass, so then a drying agent at the to-be-bent part of the spacer are blown towards two sides by means of gas blowing, so as to facilitate later bending at the to-be-bent part of the spacer. The bending method of the present application can reduce the power consumption of the previous processing method by applying vibration, reduce the production and processing cost of the spacer, and the corresponding gas distribution system has a simple structure and has a low failure rate.
3. The bending method for a filling-type spacer for an insulating glass in the present application can effectively improve the bending efficiency of the filling-type spacer, potentially by 60% to 70% compared with the bending method by applying vibration.
4. In the previous bending method by applying vibration, once there is a significant amount of residual drying agent inside the spacer during the bending, the bending mechanism requires an increased tensile force to bend the spacer and thus may be offset from the set position, resulting in inaccurate bending dimensions of the spacer and also deformation of the bending mechanism. By means of gas blowing, the tensile force for bending the spacer can be reduced, thereby improving the overall service life and stability of the bending mechanism.
5. The present application can optimize the mechanism layout of the previous filling-type spacer bending mechanism, reducing the number of components used and enabling the bending mechanism to be made smaller in size, thus facilitating manufacturing.

Specific embodiment of the invention is disclosed in detail with reference to the following description and the accompanying drawings, indicating the manner in which the principles of the invention may be employed. It should be understood that the embodiment of the present invention is not thus limited in scope. Features that are described and/or illustrated with respect to one embodiment may be used in the same way or in a similar way in one or more other embodiments and/or in combination with or instead of the features of the other embodiments.

### Brief Description of the Drawings

FIG. 1 is a flow chart of steps of a bending method for a filling-type spacer for an insulating glass according to an embodiment of the present disclosure;
FIG. 2 is a cross-sectional view of the filling-type spacer according to an embodiment of the present disclosure;
FIG. 3 is a structural schematic diagram of a second surface of the filling-type spacer according to an embodiment of the present disclosure;
FIG. 4 is an enlarged view of I in FIG. 2;
FIG. 5 is a structural schematic diagram when a gas distribution system cooperates with the spacer to blow gas according to an embodiment of the present disclosure;
FIG. 6 is a schematic diagram when a to-be-bent part of the spacer is bent by using a first bending tool according to an embodiment of the present disclosure;
FIG. 7 is a schematic diagram when a to-be-bent part of the spacer is bent by using a first bending tool in conjunction with a second bending tool according to an embodiment of the present disclosure;
FIG. 8 is a structural schematic diagram of a lower bracket in an inflating mechanism according to an embodiment of the present disclosure.

Reference signs are as below:
1. spacer; 2. desiccant; 3. through hole; 4. first surface; 5. second surface; 51. inwardly concave structure; 6. upper pressing mechanism; 7. inflating mechanism; 71. lower bracket; 72. groove; 73. gas outlet port; 74. limiting portion; 75. gas inlet port; 8. quick joint; 9. throttle valve; 10. gas branch; 11. multi-way joint; 12. main gas path; 13. gas storage device; 14. pneumatic control valve; 15. drying device; 16. filtering device; 161. primary filtering device; 162. precise filtering device; 17. depressurizing device; 18. first bending tool; 181. abutting end; 19. second bending tool; 191. first rotating member; 192. second rotating member.

### Detailed Description

In order to further elaborate the technical features and effects of the present disclosure for achieving the intended purpose of the present disclosure, specific embodiments, structure, features and effects of the present disclosure will now be described in detail with reference to the drawings.

In order to solve the problem that a drying agent inside the filling-type spacer will hinder the bending of the spacer, and to improve the processing quality and the processing efficiency of the filling-type spacer 1, the present application proposes a bending method for a filling-type spacer for an insulating glass. Wherein the filling-type spacer 1 is formed with a plurality of through holes 3, and the spacer 1 is filled with drying agent 2 such as molecular sieves. In a specific embodiment, the filling-type spacer 1 may include a first surface 4 and a second surface 5 that are opposite to each other. The second surface 5 is a side facing inwards when the insulating glass spacer 1 is bent, and a plurality of through holes 3 are opened on the second surface 5. After the filling-type spacer 1 is installed in the insulating glass, a drying agent 2 can be connected to the gas inside the insulating glass through the through holes 3, thereby absorbing the moisture in the gas and keeping the gas inside the insulating glass to be dry. The desiccant 2 is generally granular, and has a diameter larger than that of the through holes 3, which thus can prevent the desiccant 2 from falling out of the through holes 3.

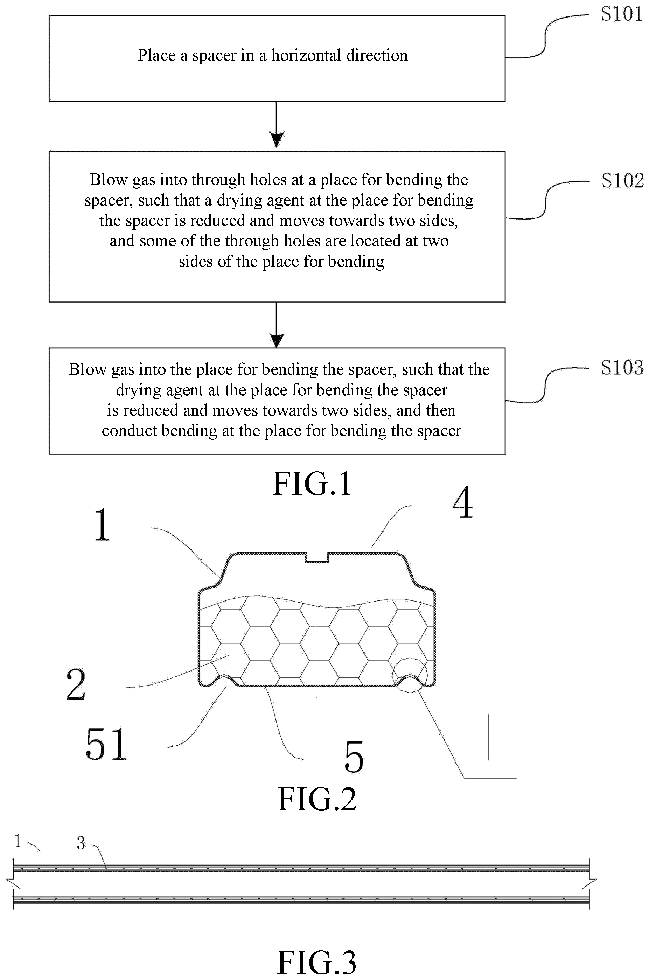

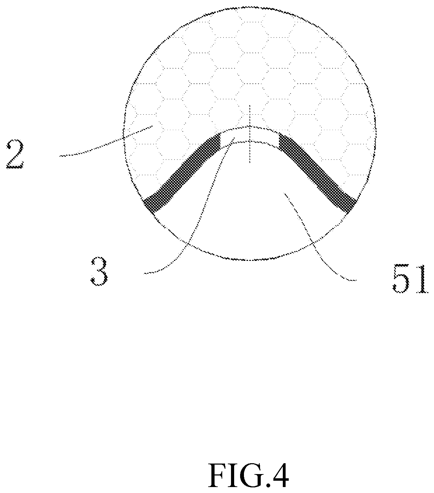

For example, in a specific embodiment, FIG. 2 is a cross-sectional view of the filling-type spacer according to an embodiment of the present disclosure, FIG. 3 is a structural schematic diagram of a second surface of the filling-type spacer according to an embodiment of the present disclosure, FIG. 4 is an enlarged view of I in FIG. 2. As shown in FIGs. 2 to 4, the second surface 5 of the filling-type spacer 1 has an inwardly concave structure 51 on each of both sides, and the inwardly concave structure 51 extends along an extension direction of the filling-type spacer 1. The through holes 3 is opened at the bottom of the inwardly concave structure 51, and the plurality of through holes 3 are arranged along the extension direction of the inwardly concave structure 51. The filling-type spacer 1 is filled with drying agent 2 which have a certain height in a vertical direction. The through holes 3 for blowing gas into the interior of the spacer 1 may also be opened on the first surface 4 of the spacer 1, or on a side of the spacer 1 that adheres to the insulating glass.

FIG. 1 is a flow chart of steps of a bending method for a filling-type spacer for an insulating glass according to an embodiment of the present disclosure. As shown in FIG. 1, the bending method for a filling-type spacer for an insulating glass may comprise:
Step S101: placing the spacer 1 in a horizontal direction.

In this step, the spacer 1 is first placed in a horizontal direction, or in a substantially horizontal direction, as long as the drying agent 2 inside the spacer 1 do not flow.

Step S102: blowing gas into the through holes 3 at a to-be-bent part of the spacer 1, such that the drying agent 2 at the to-be-bent part of the spacer 1 is reduced and moves towards two sides, and a portion of the through holes 3 are located at two sides of the to-be-bent part.

In this step, gas can be blown into the through holes 3 at the to-be-bent part of the spacer 1, and the drying agent 2 at the to-be-bent part of the spacer 1 are blown towards two sides utilizing high pressure characteristics of the gas, so as to reduce the drying agent 2 at the to-be-bent part of the spacer 1. Because the gas blown into the spacer 1 needs to be discharged so as to ensure that the drying agent 2 at the to-be-bent part of the spacer 1 are blown towards two sides, a portion of the through holes 3 are located at two sides of the to-be-bent part.

Feasibly, the intake pressure of the gas may be greater than or equal to 0.2 MPa. In order to improve efficiency, the ventilation time is determined by the magnitude of the ventilation pressure, which can generally be less than or equal to 5 seconds, or it can fall within other ranges. Under the intake pressure, most of the drying agent 2 at the to-be-bent part of the spacer 1 can be effectively blown towards both sides, to ensure the degree of reduction of the drying agent 2 at the to-be-bent part of the spacer 1 after blowing. Because there are usually only one or two through holes 3 in the radial section of the spacer 1, which cannot cover the entire second surface 5 in the radial section of the spacer 1, it is necessary to also blow the drying agent 2 at other positions on the second surface 5 in the radial section of the spacer 1 towards both sides, which thus in turn requires sufficient pressure. Meanwhile, under the intake pressure, it is possible to effectively reduce the ventilation time and improve the efficiency of bending.

Feasibly, the gas can be a compressible gas. The gas can include one of the following: air, carbon dioxide, nitrogen, argon, and so on. The gases mentioned above have low cost and do not pose any other hazards. Other types of gases can certainly also be used in the present application, and which is not limited in the present application. Furthermore, the gas should be as dry and clean as possible to reduce the consumption of the drying agent 2 and not affect their absorption of moisture.

When there is one to-be-bent part of the spacer 1, gas can be blown into the through holes 3 at the one to-be-bent part of the spacer 1. When there are two or more to-be-bent parts of the spacer 1, in order to improve the efficiency of bending, in this step, gas can be blown into the through holes 3 at a plurality of to-be-bent parts of the spacer 1 at the same time, such that the drying agent 2 at the plurality of to-be-bent parts of the spacer 1 is reduced and moves towards the respective two sides, and a portion of the through holes 3 are located at two sides of each to-be-bent part. In order to ensure that the blown-in gas can be discharged, a portion of the through holes 3 need to be located between adjacent to-be-bent parts.

In order to ensure as much as possible that the residual drying agent 2 at the to-be-bent part of the spacer 1 does not affect the later bending operation after gas blowing operation is completed at the spacer 1, further, after gas blowing operation is completed at the spacer 1, the volume of the residual drying agent 2 at the to-be-bent part inside the spacer 1 is less than or equal to 5% of the drying agent 2 prior to the gas blowing operation.

During blowing gas into the through holes 3 at the to-be-bent part of the spacer 1, a gas outlet port of the inflating mechanism 7 can be abutted against the second surface of the to-be-bent part of the spacer 1, so that the gas outlet port 73 is communicated with at least one through holes 3 at the to-be-bent part of the spacer 1. The length of the gas outlet port 73 that covers the through holes 3 on the spacer 1 is greater than or equal to 1.1 times the arc length that needs to be bent at the to-be-bent part of the spacer 1. By the above method, the degree to which the drying agent 2 at the to-be-bent part of the spacer 1 are blown towards both sides can be improved.

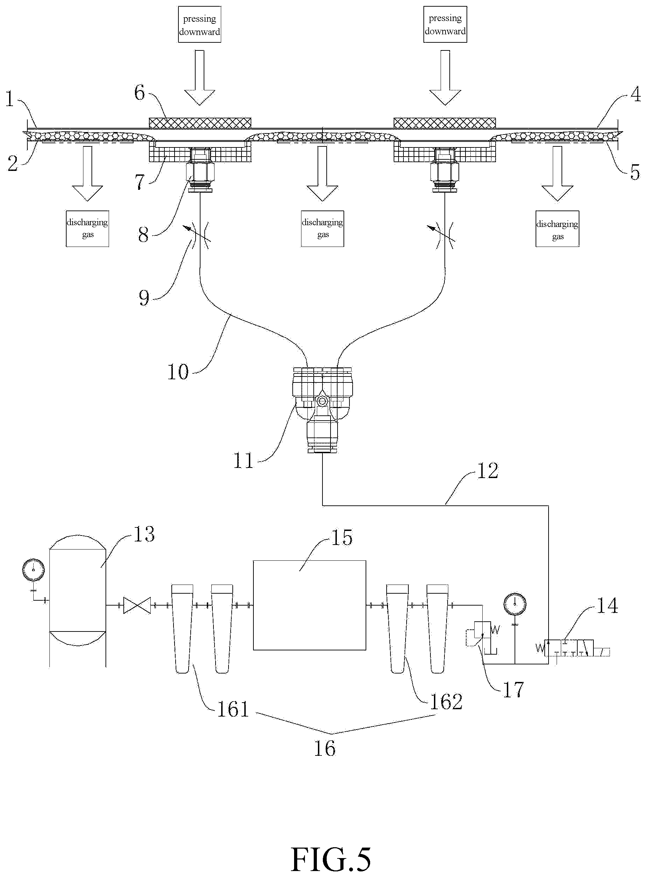

In order to facilitate gas blowing at the to-be-bent part of the spacer 1, the present application further proposes a gas distribution system. FIG. 5 is a structural schematic diagram when a gas distribution system cooperates with the spacer to blow gas according to an embodiment of the present disclosure. As shown in FIG. 5, the gas distribution system may comprise: a gas storage device 13; a pneumatic control valve 14; a drying device 15, a filtering device 16, and a depressurizing device 17 or any one or combination of any two thereof connected between an outlet of the gas storage device 13 and the pneumatic control valve 14; an inflating mechanism 7, a gas inlet port 75 of which is connected to an outlet of the pneumatic control valve 14, and a gas outlet port 73 of which can abut against wall surface, such as a second surface 5, of the to-be-bent part of the spacer 1, so that the gas outlet port 73 is communicated with the plurality of through holes 3 at the to-be-bent part of the spacer 1. The gas distribution system may further comprise an upper pressing mechanism 6, which can closely adhere to the first surface 4 of the spacer 1 and simultaneously apply a downward pressing force, such that the inflating mechanism 7 can closely adhere to the second surface 5 of the spacer 1, making the spacer 1 less prone to lateral movement.

Wherein the gas storage device 13 is used to store high-pressure compressed gas. The drying device 15 is used to dry and dehumidify the gas output from the gas storage device 13. The filtering device 16 is used to filter the gas output from the gas storage device 13 to remove solid impurities from the gas. The filtering device 16 may include a primary filtering device 161 and a precise filtering device 162, which have different filtering accuracies. The primary filtering device 161 can be connected upstream of the precise filtering device 162. For example, the primary filtering device 161, the drying device 15, and the precise filtering device 162 can be connected in sequence, and then connected to the depressurizing device 17 and then connected to the pneumatic control valve 14. The pneumatic control valve 14 can control the output of the compressed gas after it is depressurized. The gas after passing through the depressurizing device 17 can still be compressed gas at a pressure higher than atmospheric pressure.

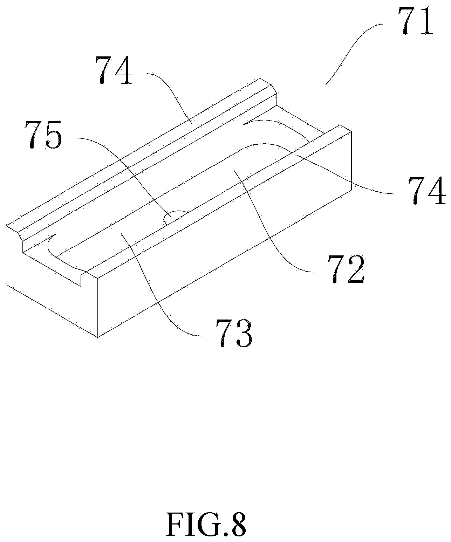

When the gas outlet port 73 of the inflating mechanism 7 abuts against the wall surface of the to-be-bent part of the spacer 1 to blow gas into the interior of the to-be-bent part of the spacer 1, in order to reduce gas leakage, FIG. 8 is a structural schematic diagram of a lower bracket in an inflating mechanism according to an embodiment of the present disclosure, as shown in FIG. 8, the inflating mechanism 7 may include: a lower bracket 71, one side of which that abuts against the wall surface (such as the second surface) of the to-be-bent part of the spacer 1 has a groove 72, wherein the groove 72 forms the gas output port 73, both sides of the groove 72 are respectively provided with two limiting portions 74 which are protruding and extend along the extension direction of the groove 72, and the distance between the two limiting portions 74 is equal to the width of the spacer 1; the gas inlet port 75 on the lower bracket 71 is communicated with the gas outlet port 73. With the structure mentioned above, the spacer 1 can be clamped into the two limiting portions 74, and the side walls of the limiting portions 74 are closely attached to the side walls of the spacer 1, and in this way, it is possible to minimize the leakage of gas through gaps between the side walls of the limiting portions 74 and the side walls of the spacer 1 during gas blowing. The groove 72 does not penetrate through the lower bracket 71 in the extension direction of the spacer 1, so that when the second surface 5 of the spacer 1 abuts against the upper surface of the lower bracket 71, the gas output from the gas outlet port 73 of the lower bracket 71 is less likely to leak through the gap between the upper surface of the lower bracket 71 and the second surface 5 of the spacer 1. With the several structures mentioned above, it can be ensured that the gas output from the gas outlet port 73 of the lower bracket 71 still has a high pressure after passing through the through holes 3 of the spacer 1 and entering the interior of the spacer 1, thereby blowing the drying agent 2 at the to-be-bent part of the spacer 1 towards both sides. During the process of inputting the gas from the lower bracket 71 into the spacer 1, the leakage rate of gas should be kept at or below 10% as much as possible, otherwise, waste of gas may be caused and production costs may be increased.

When the second surface 5 of the filling-type spacer 1 has an inwardly concave structure 51 on each of both sides, and the through holes 3 is opened at the bottom of the inwardly concave structure 51, the shape of the upper surface of the lower bracket 71 between the two limiting portions 74 is the same as that of the second surface 5 of the filling-type spacer 1 which has the inwardly concave structure 51, and in this way, the upper surface of the lower bracket 71 between the two limiting portions 74 and the second surface 5 of the filling-type spacer 1 which has the inwardly concave structure 51 can be matched to form effective seal, thereby reducing the leakage of gas.

When the gas is blown into the through holes 3 at a plurality of to-be-bent parts of the spacer 1 at the same time, there are plural inflating mechanisms 7, corresponding to the number of the to-be-bent parts. The outlet of the pneumatic control valve 14 is connected to the multi-way joint 11 through a main gas path 12, and the multi-way joint 11 is connected to the gas inlet port 75 of the inflating mechanism 7 through a plurality of gas branches 10 respectively. A throttle valve 9 can be connected onto the gas branch 10, and the throttle valve 9 is used to regulate the gas flow and ensure that the individual gas branches 10 have consistent gas flow. Within a unit time, through regulation by the throttle valve 9, the deviation in gas flow between the gas branches 10 is controlled within 5% to the greatest extent possible. In this way, it is possible to effectively prevent the pressure of the gas blown into a certain to-be-bent part from being too low, and the drying agent 2 at the to-be-bent part adjacent to the certain to-be-bent part from being blown to the certain to-be-bent part, which otherwise cannot guarantee the processing quality of the certain to-be-bent part during later bending.

A quick joint 8 can be connected at the gas inlet port 75 of the inflating mechanism 7, and the gas branch 10 can be connected to the quick joint 8 at the gas inlet port 75 of the inflating mechanism 7, and in this way, a detachable connection can be achieved, facilitating the connection and installation between apparatuses.

Furthermore, the ventilation cross-sectional area of the main gas path 12 should be greater than or equal to the sum of the ventilation cross-sectional areas of all gas branches 10. The pressure of the gas passing through the main gas path 12 should be greater than or equal to 0.2 Mpa as much as possible.

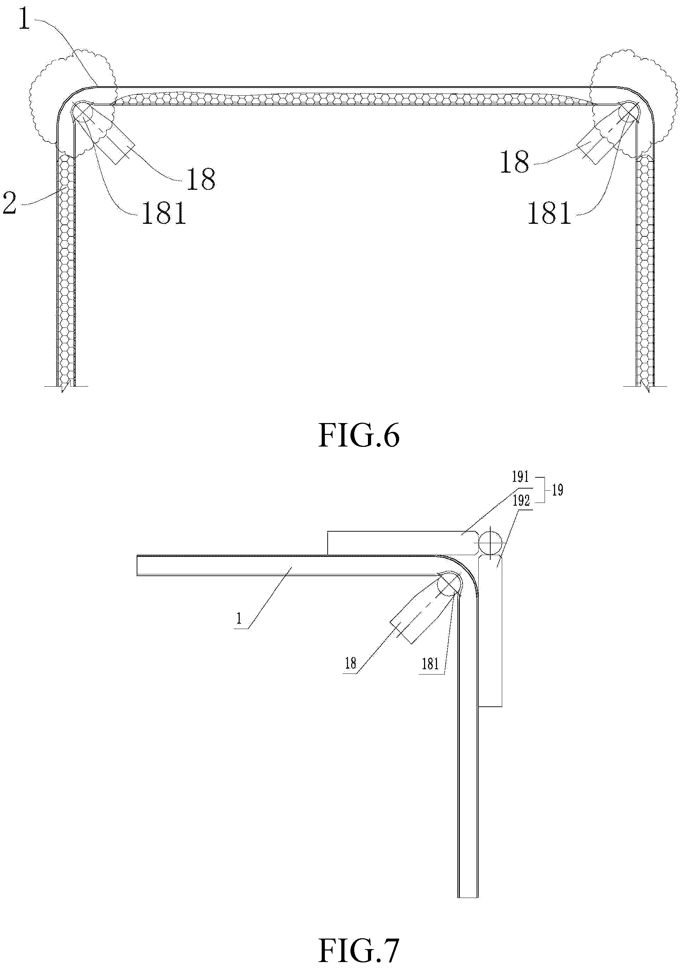

Feasibly, FIG. 6 is a schematic diagram when a to-be-bent part of the spacer is bent by using a first bending tool according to an embodiment of the present disclosure, and FIG. 7 is a schematic diagram when a to-be-bent part of the spacer is bent by using a first bending tool in conjunction with a second bending tool according to an embodiment of the present disclosure. As shown in FIGs. 6 and 7, the gas distribution system can comprise a bending mechanism, which includes a first bending tool 18 and a second bending tool 19. An abutting end of the first bending tool 18 and the second bending tool 19 can come into contact with the second surface 5 and the first surface 4 of the spacer 1, respectively. The first bending tool 18 and the second bending tool 19 can be matched to bend the to-be-bent part of the spacer 1 after the gas is blown into the to-be-bent part.

Step S103: performing a bending operation at the to-be-bent part of the spacer 1, after blowing gas into the to-be-bent part of the spacer 1 such that drying agent at the to-be-bent part of the spacer 1 is reduced and moves towards two sides.

In this step, because the majority or all of the drying agent 2 at the to-be-bent part of the spacer 1 is blown towards both sides after gas blowing operation is completed at the spacer 1, then there is basically no residual desiccant 2 at the to-be-bent part of the spacer 1, so that there will be no desiccant 2 to hinder the bending of the spacer 1 during the bending of the to-be-bent part of the spacer 1.

Feasibly, as shown in FIG. 6, it is feasible to use an abutting end 181 of the first bending tool 18 which comes into contact with the second surface 5 of the spacer 1, and to cause a middle portion of the to-be-bent part of the spacer 1 to correspondingly abut against the center of the abutting end 181 of the first bending tool 18. Thereafter, an external force can be applied to the first surface 4 of the spacer 1 and towards the direction of an abutting member to bend the spacer 1 at a certain angle. For example, as shown in FIG. 7, the spacer 1 can be bent at a certain angle in conjunction with the second bending tool 19. The second bending tool 19 includes a first rotating member 191 and a second rotating member 192 which are hinged at a hinge center that is a rotation center of the second bending tool 19. The first rotating member 191 and the second rotating member 192 of the second bending tool 19 are both placed horizontally on the first surface 4 of the spacer 1. Thereafter, the second rotating member 192 of the second bending tool 19 is rotated clockwise by a certain angle, thereby bending the to-be-bent part of the spacer 1.

Furthermore, in the step S101 of placing the spacer 1 in a horizontal direction, the second surface 5 of the spacer 1 can be oriented downward, while the first surface 4 of the spacer 1 can be oriented upward. In this way, the drying agent 2 inside the spacer 1 basically cover the second surface 5 of the spacer 1. When the gas is blown into the spacer 1 through the through holes 3 on the second surface 5, the gas can directly blow the drying agent 2 on the second surface 5 up and then move the drying agent 2 towards both sides. In terms of overall effect, this method can minimize the amount of the drying agent 2 remaining at the to-be-bent part after the gas blowing is completed, while also using a relatively minimal amount of gas for blowing.

The present application may have the following advantages:
1. Compared with the method of applying vibration and then performing bending in the prior art, the bending method for a filling-type spacer for an insulating glass in the present application can effectively reduce generation of noise and overcome the problem that the bending mechanism components are prone to loosen due to vibration, thereby improving the stability of the mechanism.
2. In the bending method for a filling-type spacer for an insulating glass in the present application, the through holes 3 on the filling-type spacer 1 which are per se used such that the internal drying agent 2 is communicated with the gas inside the insulating glass, so then the drying agent 2 at the to-be-bent part of the spacer 1 is blown towards two sides by means of gas blowing, so as to facilitate later bending at the to-be-bent part of the spacer 1. The bending method of the present application can reduce the power consumption of the previous processing method by applying vibration, reduce the production and processing cost of the spacer 1, and the corresponding gas distribution system has a simple structure and has a low failure rate.
3. The bending method for a filling-type spacer for an insulating glass in the present application can effectively improve the bending efficiency of the filling-type spacer 1, potentially by 60% to 70% compared with the bending method by applying vibration.
4. In the previous bending method by applying vibration, once there is a residual drying agent 2 inside the spacer 1 during the bending, the bending mechanism requires an increased tensile force to bend the spacer 1 and thus may be offset from the set position, resulting in inaccurate bending dimensions of the spacer 1 and also deformation of the bending mechanism. By means of gas blowing, the tensile force for bending the spacer 1 can be reduced, thereby improving the overall service life and stability of the bending mechanism.
5. The present application can optimize the mechanism layout of the previous filling-type spacer bending mechanism, reducing the number of components used and enabling the bending mechanism to be made smaller in size, thus facilitating manufacturing.

The above embodiments are only preferred embodiments of the present disclosure
and cannot be used to limit the scope of protection of the present disclosure. Any non-essential changes and substitutions made by those skilled in the art on the basis of the present disclosure are within the scope of protection claimed by the present disclosure.

## Claims

1. A bending method for a filling-type spacer for an insulating glass, wherein the filling-type spacer is formed with a plurality of through holes, and the spacer is filled with drying agent; the bending method for a filling-type spacer for an insulating glass comprising:
placing the spacer in a horizontal direction;
blowing gas into the through holes at a to-be-bent part of the spacer, such that the drying agent at the to-be-bent part of the spacer is reduced and moves towards two sides, and a portion of the through holes are located at two sides of the to-be-bent part;
performing a bending operation at the to-be-bent part of the spacer after blowing gas into the to-be-bent part of the spacer such that the drying agent at the to-be-bent part of the spacer is reduced and moves towards two sides.

2. The bending method for a filling-type spacer for an insulating glass according to claim 1, wherein the step of placing the spacer in a horizontal direction includes: placing a second surface of the spacer to face downwards and a first surface of the spacer to face upwards.

3. The bending method for a filling-type spacer for an insulating glass according to claim 1, wherein the gas is a dry gas.

4. The bending method for a filling-type spacer for an insulating glass according to claim 1, wherein the gas is a compressible gas; the gas includes one of the following: air, carbon dioxide, nitrogen, argon.

5. The bending method for a filling-type spacer for an insulating glass according to claim 1, wherein intake pressure of the gas is greater than or equal to 0.2 MPa, and ventilation time is less than or equal to 5 seconds.

6. The bending method for a filling-type spacer for an insulating glass according to claim 1, wherein the step of blowing gas into the through holes at a to-be-bent part of the spacer, such that the drying agent at the to-be-bent part of the spacer is reduced and moves towards two sides, and a portion of the through holes are located at two sides of the to-be-bent part comprising:
blowing gas into the through holes at a plurality of to-be-bent parts of the spacer at the same time, such that the drying agent at the plurality of to-be-bent parts of the spacer is reduced and moves towards the respective two sides, and a portion of the through holes are located at two sides of each of the to-be-bent parts, and a portion of the through holes are located between adjacent ones of the to-be-bent parts.

7. The bending method for a filling-type spacer for an insulating glass according to claim 1, wherein after gas blowing operation is completed at the spacer, volume of the residual drying agent at the to-be-bent part inside the spacer is less than or equal to 5% of the drying agent prior to the gas blowing operation.

8. The bending method for a filling-type spacer for an insulating glass according to claim 1, wherein in the step of blowing gas into the through holes at a to-be-bent part of the spacer, a gas outlet port of an inflating mechanism is abutted against the second surface of the to-be-bent part of the spacer, so that the gas outlet port is communicated with at least one of the through holes at the to-be-bent part of the spacer.

9. A gas distribution system to which the bending method for a filling-type spacer for an insulating glass according to any of claims 1 to 8 is applied, wherein the gas distribution comprises:
a gas storage device;
a pneumatic control valve;
a drying device, a filtering device, and a depressurizing device or any one or combination of any two thereof connected between an outlet of the gas storage device and the pneumatic control valve;
an inflating mechanism, a gas inlet port of which is connected to an outlet of the pneumatic control valve, and a gas outlet port of which can abut against wall surface of the to-be-bent part of the spacer, so that the gas outlet port is communicated with the plurality of through holes at the to-be-bent part of the spacer.

10. The gas distribution system according to claim 9, wherein the inflating mechanism comprises: a lower bracket, one side of which that abuts against the wall surface of the to-be-bent part of the spacer has a groove, wherein the groove forms the gas output port, both sides of the groove are respectively provided with two limiting portions which are protruding and extend along an extension direction of the groove, and a distance between the two limiting portions is equal to a width of the spacer; the gas inlet port on the lower bracket is communicated with the gas outlet port.
